# EUROPÄISCHE PATENTSCHRIFT

(11) **EP 2 106 977 B1**
(45) Veröffentlichungstag und Bekanntmachung des Hinweises auf die Patenterteilung: **08.01.2014**
(21) Anmeldenummer: 09004299.5
(22) Anmeldetag: 25.03.2009
(51) Int. Cl.: B60R 25/20, B60R 25/24

(54) **Verfahren und Vorrichtung zur automatischen Verriegelung eines Fahrzeugs sowie entsprechend ausgestaltetes Fahrzeug**
Method and device for automatically locking a vehicle and vehicle with corresponding equipment
Procédé et dispositif de verrouillage automatique d'un véhicule et véhicule équipé de manière correspondante

(30) Priorität: 02.04.2008 DE 102008016852
(43) Veröffentlichungstag der Anmeldung: 07.10.2009
(73) Patentinhaber: Volkswagen Aktiengesellschaft, 38440 Wolfsburg (DE); Audi AG, 85045 Ingolstadt (DE)
(72) Erfinder: Thiele, Andreas, 38442 Wolfsburg (DE); Grave, Dietmar, 38527 Meine (DE); Müller, Frank, 90537 Feucht (DE)
(74) Vertreter: Banzer, Hans-Jörg

(56) Entgegenhaltungen:
- DE-A1- 10 353 589
- US-A1- 2007 200 668
- US-A1- 2007 216 517

## Beschreibung

Die vorliegende Erfindung betrifft ein Verfahren und eine Vorrichtung, um ein Fahrzeug, welches mit einem "Keyless Entry"-System ausgestattet ist, automatisch zu verriegeln sowie ein entsprechend ausgestaltetes Fahrzeug.

Die US 2007/0216517 A1 offenbart ein Verfahren, welches eine Fahrzeugtür verriegelt, wenn die Fahrzeugtür geschlossen wird und keine Sitzbelegung erfasst wird. Diese Druckschrift offenbart auch, dass vor der Verriegelung ein Schlüsselanhänger außerhalb des Fahrzeugs erfasst werden muss.

Die US 2007/0200668 A1 beschreibt eine automatische Verriegelung von Fahrzeugtüren, wenn ein Schlüsselanhänger den Kommunikationsbereich des Fahrzeugs verlässt.

Die DE 103 53 589 A1 offenbart eine Verriegelung eines Fahrzeugs, wenn einerseits die Türen des Fahrzeugs geschlossen sind und wenn andererseits ein Signal empfangen wird, dass der Pegel des Empfangs der von dem Fahrzeug ausgesendeten Signale niedrig oder Null ist.

Nach dem Stand der Technik sind "Keyless Entry"-Systeme bekannt, welche verhältnismäßige komplizierte Bedingungen (z.B. eine Entfernung eines ID-Gebers von dem Fahrzeug oder ein vorheriges Vorhandensein des ID-Gebers innerhalb des Fahrzeugs) abprüfen, um beim Vorliegen dieser Bedingungen das Fahrzeug zu verriegeln. Dies wirkt sich zum einen negativ auf eine Ruhestrombilanz des Fahrzeugs aus und zum anderen wird eine Batterie des ID-Gebers stark belastet.

Daher ist es die Aufgabe der vorliegenden Erfindung, diese Nachteile nach dem Stand der Technik zumindest zu verringern.

Erfindungsgemäß wird diese Aufgabe durch ein Verfahren zur automatischen Verriegelung eines Fahrzeugs nach Anspruch 1, eine Vorrichtung zur automatischen Verriegelung eines Fahrzeugs nach Anspruch 7 und ein Fahrzeug mit einer entsprechenden Vorrichtung nach Anspruch 13 gelöst. Die abhängigen Ansprüche definieren bevorzugte und vorteilhafte Ausführungsformen der vorliegenden Erfindung.

Im Rahmen der vorliegenden Erfindung wird ein Verfahren zur automatischen Verriegelung eines Fahrzeugs bereitgestellt. Dabei wird das entriegelte Fahrzeug automatisch verriegelt, wenn folgende beide Bedingungen vorliegen:
- eine Tür oder eine Klappe des Fahrzeugs wird geschlossen
- ein ID-Geber wird außerhalb des Fahrzeugs erfasst.

Im Gegensatz zum Stand der Technik werden keine komplizierten Bedingungen überprüft, sondern es wird von einem "Keyless Entry"-System nur dann, wenn eine Tür oder eine Klappe des Fahrzeugs geschlossen wird, nur überprüft, ob sich ein ID-Geber außerhalb des Fahrzeugs befindet. Dadurch sucht das "Keyless Entry"-System nur dann zur Verriegelung des Fahrzeugs nach einem ID-Geber außerhalb des Fahrzeugs, wenn kurz vorher die Tür oder die Klappe geschlossen wurde. Dadurch verbraucht das Fahrzeug oder besser das "Keyless Entry"-System des Fahrzeugs nur Energie, wenn die Tür oder die Klappe des Fahrzeugs geschlossen wird, und auch der ID-Geber, welcher durch die Suche des "Keyless Entry"-Systems zum Aussenden eines Funksignals angeregt wird, verbraucht nur Energie, wenn er sich außerhalb des Fahrzeugs befindet und wenn die Tür oder die Klappe des Fahrzeugs geschlossen wird. Daher verbrauchen sowohl das "Keyless Entry"-System als auch der ID-Geber durch die vorliegende Erfindung weniger Energie als nach dem Stand der Technik üblich.

Dabei wird das entriegelte Fahrzeug bei einer bevorzugten erfindungsgemäßen Ausführungsform dann automatisch über das "Keyless Entry"-System verriegelt, wenn es sich bei der Tür, welche geschlossen wird, um die Fahrertür des Fahrzeugs handelt. Türen oder Klappen des Fahrzeugs, welche zum Zeitpunkt, zu welchem die Fahrertür geschlossen wird, noch offen sind, werden bei dieser Ausführungsform entweder im offenen Zustand verriegelt oder sie werden verriegelt, sobald sie geschlossen werden. Bei dieser Ausführungsform wird das Fahrzeug also unabhängig von einem Öffnungszustand einer anderen Tür oder Klappe des Fahrzeugs verriegelt. Dabei gibt der Öffnungszustand einer Tür bzw. Klappe an, ob die entsprechende Tür bzw. Klappe offen oder geschlossen ist. Mit anderen Worten wird bei dieser Ausführungsform das Fahrzeug auch dann verriegelt, wenn andere Türen als die Fahrertür oder Klappen noch offen sind, wenn die Fahrertür geschlossen wird und ein ID-Geber außerhalb des Fahrzeugs erfasst wird. Dagegen wird das Fahrzeug nicht verriegelt, wenn bei dieser Ausführungsform die Fahrertür offen ist (und beispielsweise eine andere Tür oder eine Klappe geschlossen wird).

Das entriegelte Fahrzeug kann aber auch nur dann automatisch über das "Keyless Entry"-System verriegelt werden, wenn alle Türen und Klappen des Fahrzeugs geschlossen sind. Bei dieser Ausführungsform wird das Fahrzeug also nur dann verriegelt, wenn die letzte Tür oder Klappe geschlossen wird und ein ID-Geber außerhalb des Fahrzeugs erfasst wird.

Die Überprüfung, ob sich der ID-Geber außerhalb des Fahrzeugs befindet, wird nur eine vorbestimmte Zeitspanne (maximal 1 Sekunde) lang, unmittelbar nachdem die Tür oder die Klappe des Fahrzeugs geschlossen wurde, durchgeführt. Dabei wird das entriegelte Fahrzeug nur dann von dem "Keyless Entry"-System verriegelt, wenn der ID-Geber in der vorbestimmten Zeitspanne gefunden wurde.

Da erfindungsgemäß nur überprüft werden soll, ob sich zu dem Zeitpunkt, zu welchem die Tür oder die Klappe des Fahrzeugs geschlossen wird, der ID-Geber außerhalb des Fahrzeugs befindet, ist es ausreichend, dass LF-Feld (Low Frequency Feld) von dem "Keyless Entry"-System nur solange ausstrahlen zu lassen, dass sichergestellt ist, dass sich ein zu diesem Zeitpunkt am Fahrzeug befindlicher ID-Geber aufgrund des ausgesendeten LF-Feldes meldet und so von dem "Keyless Entry"-System erfasst wird.

Bei einer bevorzugten erfindungsgemäßen Ausführungsform wird der ID-Geber nur in einem Bereich derjenigen Tür oder derjenigen Klappe gesucht, welche geschlossen wurde.

Durch diese Ausführungsform wird sowohl die von dem "Keyless Entry"-System wie auch die von dem ID-Geber verbrauchte Energie weiter verringert, da das "Keyless Entry"-System das LF-Feld nur in einem bestimmten Bereich außerhalb des Fahrzeugs erzeugt (und nicht überall um das Fahrzeug herum) und zum anderen da ein ID-Geber, welcher sich zwar außerhalb des Fahrzeugs, aber nicht im Einflussbereich des im Bereich der geschlossenen Tür oder Klappe erzeugten LF-Feldes befindet, nicht anspricht und daher keine Energie verbraucht.

Vorteilhafterweise ist das erfindungsgemäße Verfahren zumindest von einer der folgenden Bedingung oder von allen folgenden Bedingungen unabhängig:
- Einem Abstand des ID-Gebers vom Fahrzeug.
- Einem Vorhandensein eines ID-Gebers innerhalb des Fahrzeugs, bevor die Tür oder die Klappe geschlossen wird.
- Einem Erfassen eines Öffnens der Tür oder der Klappe, welche geschlossen wurde, innerhalb eines vorbestimmten Zeitintervalls vor dem Schließen dieser Tür oder dieser Klappe.

Eine Ermittelung des Abstands des ID Gebers vom Fahrzeug benötigt relativ viel Energie, da der ID-Geber kontinuierlich zum Aussenden seines Funksignals aufgefordert werden muss, um zu entscheiden, wann ein bestimmter Abstand zwischen dem ID-Geber und dem Fahrzeug vorliegt, um abhängig von diesem Abstand das Fahrzeug zu verriegeln. Anders ausgedrückt spart das erfindungsgemäße Verfahren durch die Unabhängigkeit von dem Abstand zwischen dem ID-Geber und dem Fahrzeug Energie ein, da es diesen Abstand nicht ermittelt.

Auch die Information, ob sich vor dem Schließen der Tür oder der Klappe ein ID-Geber innerhalb des Fahrzeugs befindet, kostet Energie, da zumindest sporadisch nach einem ID-Geber innerhalb des Fahrzeugs gesucht werden muss. Daher spart das erfindungsgemäße Verfahren diese Energie ein, wenn es unabhängig von einer Bedingung arbeitet, dass der ID-Geber innerhalb des Fahrzeugs vorhanden ist, bevor die Tür oder die Klappe geschlossen wird.

Das Erfassen eines Öffnens der Tür oder der Klappe, welche geschlossen wurde, innerhalb eines vorbestimmten Zeitintervalls vor dem Schließen dieser Tür oder dieser Klappe erfordert, dass ein Signal von einem Sensor, welcher das Öffnen der Tür oder der Klappe erfasst, zu dem "Keyless Entry"-System übertragen wird. Da das erfindungsgemäße Verfahren vorteilhafterweise ohne dieses Signal von dem Sensor realisiert werden kann, kann das erfindungsgemäße Verfahren oder ein entsprechend ausgestaltetes "Keyless Entry"-System einfacher oder preiswerter realisiert werden.

Im Rahmen der vorliegenden Erfindung wird auch eine Vorrichtung zur automatischen Verriegelung eines Fahrzeugs bereitgestellt. Diese Vorrichtung, beispielsweise ein "Keyless Entry"-System des Fahrzeugs, umfasst mindestens eine Sendeantenne, mindestens eine Empfangsantenne, eine Steuereinheit, eine Verriegelungsvorrichtung zur Verriegelung aller Türen und Klappen des Fahrzeugs und mindestens einen Sensor. Dabei meldet der mindestens eine Sensor der Steuereinheit, wenn eine Tür oder eine Klappe des Fahrzeugs geschlossen wird. Dazu ist in der Regel jeweils ein Sensor derart mit einer Klappe oder einer Tür des Fahrzeugs verbunden, dass dieser Sensor ein Schließen dieser Klappe oder dieser Tür erfasst. Die Vorrichtung ist derart ausgestaltet, dass die Vorrichtung über die mindestens eine Sendeantenne nach einem ID-Geber außerhalb des Fahrzeugs sucht, wenn einer der Sensoren meldet, dass seine Tür oder seine Klappe geschlossen wurde. Dazu strahlt die mindestens eine Sendeantenne ein Funksignal im LF-Frequenzband ab. Die Steuereinheit beauftragt die Verriegelungsvorrichtung, alle Türen und Klappen des entriegelten Fahrzeugs zu verriegeln, wenn die mindestens eine Empfangsantenne ein HF-Funksignal (High Frequency-Funksignal) von dem ID-Geber erfasst.

Dabei beauftragt die Steuereinheit insbesondere nur dann die Verriegelungsvorrichtung, alle Türen und Klappen des Fahrzeugs zu verriegeln, wenn die Vorrichtung vorher über ihre Sensoren erfasst hat, dass alle Türen und Klappen des Fahrzeugs geschlossen sind.

Die Vorrichtung ist derart ausgestaltet, dass die Vorrichtung nur über eine vorbestimmte Zeitspanne (z.B. maximal 1 Sekunde) lang mittels ihrer mindestens einen Sendeantenne eine Überprüfung durchführt, ob der ID-Geber außerhalb des Fahrzeugs vorhanden ist, wobei die Zeitspanne beginnt, wenn der mindestens eine Sensor der Vorrichtung meldet, dass die Tür oder die Klappe geschlossen wurde. Die Steuereinheit beauftragt nur dann die Verriegelungsvorrichtung, das entriegelte Fahrzeug zu verriegeln, wenn die mindestens eine Empfangsantenne den ID-Geber in der vorbestimmten Zeitspanne erfasst hat.

Bei einer bevorzugten erfindungsgemäßen Ausführungsform existiert jeweils für einen Türbereich oder Klappenbereich des Fahrzeugs eine Sendeantenne. Bei dieser Ausführungsform ist die erfindungsgemäße Vorrichtung derart ausgestaltet, dass die Vorrichtung nur über diejenige Sendeantenne ein LF-Funksignal aussendet, welche zu demjenigen Türbereich oder Klappenbereich gehört, in welchem die Tür oder die Klappe geschlossen wurde. Dabei ist es möglich, dass jeder Tür und jeder Klappe jeweils eine Sendeantenne zugeordnet ist. Es ist allerdings auch möglich, dass bestimmte Türen oder bestimmte Klappen oder bestimmte Türen und bestimmte Klappen zu einem Bereich zusammengefasst werden, welchem dann eine Sendeantenne zugeordnet wird. Beispielsweise ist es denkbar, dass bei einem viertürigen Fahrzeug den beiden Türen auf der rechten bzw. linken Seite nur jeweils eine Sendeantenne zugeordnet wird, welche mittels ihres LF-Funksignals nach einem ID-Geber sucht, wenn die vordere oder hintere Tür auf der entsprechenden Seite des Fahrzeugs geschlossen wird.

Im Rahmen der vorliegenden Erfindung wird auch ein Fahrzeug bereitgestellt, welches eine erfindungsgemäße Vorrichtung bzw. ein erfindungsgemäßes "Keyless Entry"-System umfasst.

Die vorliegende Erfindung weist gegenüber dem Stand der Technik folgende Vorteile auf:
- Die vorliegende Erfindung umfasst keine Positionsfeststellung ("Tracking") des ID Gebers. Das heißt, die vorliegende Erfindung benötigt keine genaue Positionsangabe (beispielsweise Abstand zwischen ID-Geber und Fahrzeug) des ID-Gebers, sondern der vorliegenden Erfindung reicht die Information, ob sich der ID-Geber beim Schließen der Tür oder der Klappe außerhalb des Fahrzeugs befindet oder nicht, aus.
- Die vorliegende Erfindung belastet die Batterie im ID-Geber nicht unnötig bzw. weniger also nach dem Stand der Technik üblich ist. Da entsprechend der vorliegenden Erfindung der ID-Geber nur beim Schließen der Tür oder der Klappe gesucht wird, wird die Batterie des ID-Gebers nur zu diesem Zeitpunkt verbraucht. Dagegen muss der ID-Geber nach dem Stand der Technik nahezu ständig ein HF-Funksignal aussenden, wenn er sich im Empfangsbereich des LF-Funksignals der Sendeantennen des Fahrzeugs befindet.
- Die vorliegende Erfindung weist im Vergleich zum Stand der Technik eine geringere Ruhestrombelastung des Fahrzeugs auf, da die Sendeantenne erfindungsgemäß nur beim Schließen der Tür oder der Klappe ihr LF-Funksignal aussendet.
- Die vorliegende Erfindung stört "Keyless Entry"-Systeme von in der Nähe parkenden Fahrzeugen weniger, als es nach dem Stand der Technik üblich ist, da erfindungsgemäß seltener LF-Funksignale ausgesendet werden, durch welche fremde "Keyless Entry"-Systeme gestört werden können.
- Durch die vorliegende Erfindung ist es einfach möglich, die einem Kunden bekannte Logik der Zentralverriegelung (z.B. kein Verriegeln bei offener Fahrertür) und das dem Kunden bekannte funktionale Verhalten der Zentralverriegelung (z.B. die Kontrolle der Verriegelung durch Ziehen an einem Türgriff) beizubehalten. Dabei wird unter der bekannten Zentralverriegelung eine Zentralverriegelung verstanden, bei welcher die Verriegelung des Fahrzeugs nur durch einen expliziten Tastendruck (einer Taste am Fahrzeug oder einer Taste einer Funkfernbedienung) erfolgt.

Der bevorzugte Anwendungsbereich der vorliegenden Erfindung ist ein mit einem "Keyless Entry"-System ausgestattetes Kraftfahrzeug. Selbstverständlich ist die vorliegende Erfindung nicht auf diesen bevorzugten Anwendungsbereich beschränkt, sondern kann ebenfalls bei Schiffen, Flugzeugen oder gleisgebundenen Fahrzeugen, aber auch bei feststehenden Einrichtungen, wie z.B. einem Wohnhaus, zur Verriegelung von Türen und Fenstern eingesetzt werden.

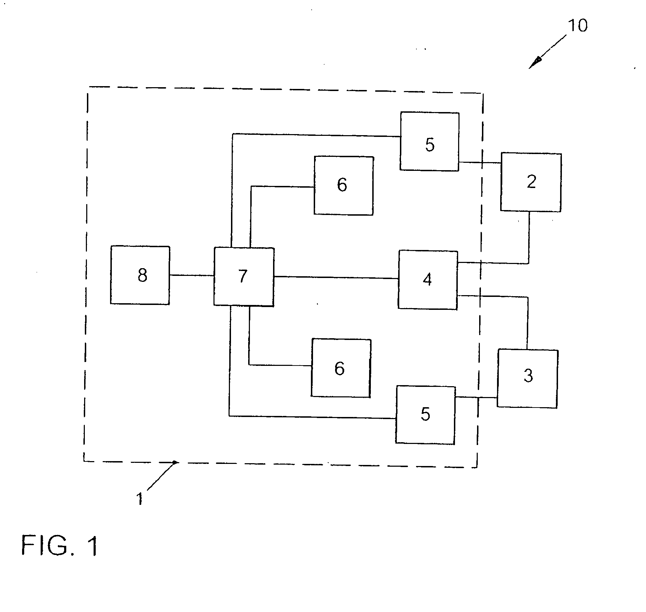

Im Folgenden wird die vorliegende Erfindung anhand bevorzugter Ausführungsformen mit Bezug auf die Zeichnung im Detail erläutert.

Die einzige Figur stellt schematisch ein erfindungsgemäßes Kraftfahrzeug mit einer erfindungsgemäßen Vorrichtung dar.

In der einzigen Figur ist ein erfindungsgemäßes Kraftfahrzeug 10 dargestellt, welches eine erfindungsgemäße Vorrichtung 1 sowie mehrere Türen 2 (in der Figur ist nur eine dargestellt) und eine Kofferraumklappe 3 umfasst. Die Vorrichtung 1 umfasst ihrerseits eine Steuereinheit 7, eine Verriegelungsvorrichtung 4, mit welcher alle Türen 2 und die Kofferraumklappe 3 des Fahrzeugs 10 verriegelt werden können, und eine Empfangsantenne 8, mit welcher ein HF-Funksignal von einem ID-Geber (nicht dargestellt) außerhalb des Fahrzeugs 10 empfangen werden kann. Darüber hinaus umfasst die Vorrichtung 1 für jede Tür einen Sensor 5, mit welchem ein Schließen der Tür 2 erfasst werden kann, und eine Sendeantenne 6, mit welcher in einem Außenbereich des Fahrzeugs 10 in der Nähe der entsprechenden Tür 2 ein LF-Funksignal zur Suche eines ID-Gebers ausgesendet werden kann. (Da in der Figur nur eine Tür 2 dargestellt ist, ist für diese Tür 2 auch nur ein Sensor 5 und eine Senderantenne 6 dargestellt.) Schließlich umfasst die Vorrichtung 1 für die Kofferraumklappe 3 ebenfalls einen Sensor, welcher ein Schließen der Kofferraumklappe 3 erfassen kann, und eine Sendeantenne 6, mit welcher in den Außenbereich des Fahrzeugs in der Nähe der Kofferraumklappe 3 ein LF-Funksignal zur Suche eines ID-Gebers ausgestrahlt werden kann.

Wenn ein Sensor 5 ein Schließen der Tür 2 oder ein Schließen der Kofferraumklappe 3 erfasst, meldet der entsprechende Sensor 5 dieses Ereignis der Steuereinheit 7. Die Steuereinheit 7 weist dann sofort die der Tür 2 oder der Kofferraumklappe 3 zugeordnete Sendeantenne 6 an, über eine vorbestimmte Zeitspanne (maximal 1 Sekunde) ein LF-Funksignal auszusenden. Genauer gesagt analysiert die Steuereinheit 7, welcher Sensor 5 gemeldet hat, dass seine Tür 2 oder seine Kofferraumklappe 3 geschlossen wurde, und weist dann die dieser Tür/Klappe oder diesem Sensor 5 zugeordnete Sendeantenne 6 an, ein LF-Funksignal auszustrahlen. Wenn sich im Außenbereich des Fahrzeugs 10 in der Nähe dieser Tür oder dieser Klappe, welche geschlossen wurde, ein ID-Geber befindet, empfängt dieser ID-Geber das von der Sendeantenne 6 ausgestrahlte LF-Funksignal und sendet quasi als Antwort darauf sein HF-Funksignal aus. Dieses HF-Funksignal wird von der Empfangsantenne 6 empfangen, welche dies an die Steuereinheit 7 meldet, wodurch die Steuereinheit 7 schließt, dass ein ID-Geber außerhalb des Fahrzeugs 10 an der Tür 2 oder der Kofferraumklappe 3 erfasst wurde, welche gerade geschlossen wurde. (Wenn die Empfangsantenne 8 nach der vorbestimmten Zeitspanne ein solches HF-Funksignal empfängt und der Steuereinheit 7 meldet, ignoriert die Steuereinheit dieses HF-Funksignal.) Die Steuereinheit 7 überprüft daraufhin, ob alle Türen 2 und die Kofferraumklappe 3 des Fahrzeugs 10 geschlossen sind. Ist dies der Fall, dann weist die Steuereinheit 7 die Verriegelungsvorrichtung 4 an, alle Türen 2 und die Kofferraumklappe 3 des Fahrzeugs 10 zu verriegeln. Wenn die Empfangsantenne 8 dagegen in der vorbestimmten Zeitspanne kein HF-Funksignal empfängt, erkennt die Steuereinheit 7 nach Ablauf der vorbestimmten Zeitspanne, dass sie kein Signal von der Empfangsantenne 8 erhalten hat. In diesem Fall schließt die Steuereinheit 7 daraus, dass kein ID-Geber an der Tür 2 oder der Kofferraumklappe 3 erfasst wurde, welche gerade geschlossen wurde. Daher sendet die Steuereinheit 7 kein Signal an die Verriegelungsvorrichtung 4, so dass die Verriegelungsvorrichtung 4 die Türen 2 und die Kofferraumklappe 3 des Fahrzeugs nicht verriegelt bzw. keine Aktion ausführt.

### BEZUGSZEICHENLISTE

- 1: Vorrichtung
- 2: Tür
- 3: Kofferraumklappe
- 4: Verriegelungsvorrichtung
- 5: Sensor
- 6: Sendeantenne
- 7: Steuereinheit
- 8: Sendeantenne
- 10: Kraftfahrzeug

## Patentansprüche

1. Verfahren zur automatischen Verriegelung eines Fahrzeugs,
wobei das Fahrzeug (10) automatisch verriegelt wird;
• wenn eine Tür (2) oder eine Klappe (3) des Fahrzeugs (10) geschlossen wird und
• wenn ein ID-Geber außerhalb des Fahrzeugs (10) erfasst wird, **dadurch gekennzeichnet, dass** nur unmittelbar nachdem die Tür (2) oder die Klappe (3) geschlossen wurde, über eine vorbestimmte Zeitspanne eine Überprüfung durchgeführt wird, ob der ID-Geber außerhalb des Fahrzeugs (10) vorhanden ist, und
dass das Fahrzeug (10) verriegelt wird, wenn der ID-Geber in der vorbestimmten Zeitspanne gefunden wurde.

2. Verfahren nach Anspruch 1, **dadurch gekennzeichnet, dass** das Fahrzeug (10) dann automatisch verriegelt wird, wenn die Fahrertür des Fahrzeugs (10) geschlossen wird, wobei dies unabhängig von einem Öffnungszustand einer anderen Tür (2) des Fahrzeugs oder einer Klappe (3) des Fahrzeugs (10) ist.

3. Verfahren nach Anspruch 1, **dadurch gekennzeichnet, dass** das Fahrzeug (10) nur dann automatisch verriegelt wird, wenn alle Türen (2) und Klappen (3) des Fahrzeugs geschlossen sind.

4. Verfahren nach einem der vorhergehenden Ansprüche, **dadurch gekennzeichnet, dass** die Zeitspanne maximal 1 s beträgt.

5. Verfahren nach einem der vorhergehenden Ansprüche, **dadurch gekennzeichnet, dass** der ID-Geber nur in einem Bereich der Tür (2) oder der Klappe (3) gesucht wird, welche geschlossen wurde.

6. Verfahren nach einem der vorhergehenden Ansprüche, **dadurch gekennzeichnet, dass** das Verfahren unabhängig von mindestens einer der folgenden Bedingungen ausgeführt wird:
• einem Abstand des ID-Gebers vom Fahrzeug (10),
• einem Erfassen von einem ID-Geber innerhalb des Fahrzeugs (10) vor dem Schließen der Tür (2) oder der Klappe (3), und
• ein Erfassen eines Öffnens der Tür (2) oder der Klappe (3), welche geschlossen wurde, innerhalb eines vorbestimmten Zeitintervalls vor dem Schließen der Tür (2) oder der Klappe(3).

7. Vorrichtung zur automatischen Verriegelung eines Fahrzeugs,
wobei die Vorrichtung (1) mindestens eine Sendeantenne (6), mindestens eine Empfangsantenne, eine Steuereinheit (7), eine Verriegelungsvorrichtung (4) zur Verriegelung des Fahrzeugs (10) und mindestens einen Sensor (5) umfasst,
wobei der mindestens eine Sensor (5) bezüglich einer Tür (2) oder einer Klappe (3) des Fahrzeugs (10) der Steuereinheit (7) meldet, wenn die Tür (2) oder die Klappe (3) geschlossen wird,
wobei die Vorrichtung (1) derart ausgestaltet ist, dass die Vorrichtung (1) mittels der mindestens einen Sendeantenne (6) einen ID-Geber außerhalb des Fahrzeugs (10) sucht, wenn der mindestens eine Sensor (5) meldet, dass die Tür (2) oder die Klappe (3) geschlossen wurde, **dadurch gekennzeichnet, dass**
die Steuereinheit (7) die Verriegelungsvorrichtung (4) anweist, das Fahrzeug (10) zu verriegeln, wenn die mindestens eine Empfangsantenne (8) den ID-Geber erfasst, wobei die Vorrichtung (1) derart ausgestaltet ist, dass die Vorrichtung (1) über die mindestens eine Sendeantenne (6) unmittelbar nachdem der mindestens eine Sensor (5) gemeldet hat, dass die Tür (2) oder die Klappe (3) geschlossen wurde, nur über eine vorbestimmte Zeitspanne eine Überprüfung durchführt, ob der ID-Geber außerhalb des Fahrzeugs (10) vorhanden ist, und dass
die Steuereinheit (7) die Verriegelungsvorrichtung (4) nur anweist, das Fahrzeug (10) zu verriegeln, wenn die mindestens eine Empfangsantenne (8) den ID-Geber in der vorbestimmten Zeitspanne erfasst hat.

8. Vorrichtung nach Anspruch 7, **dadurch gekennzeichnet, dass** die Vorrichtung (1) derart ausgestaltet ist, dass die Steuereinheit (7) die Verriegelungsvorrichtung (4) nur dann anweist, das Fahrzeug (10) zu verriegeln, wenn die Vorrichtung (1) vorher über den mindestens einen Sensor (5) erfasst hat, dass die Fahrertür des Fahrzeugs (10) geschlossen wurde, wobei dies unabhängig von einem Öffnungszustand einer anderen Tür (2) des Fahrzeugs oder einer Klappe (3) des Fahrzeugs (10) ist.

9. Vorrichtung nach Anspruch 7, **dadurch gekennzeichnet, dass** die Vorrichtung (1) derart ausgestaltet ist, dass die Steuereinheit (7) die Verriegelungsvorrichtung (4) nur dann anweist, das Fahrzeug (10) zu verriegeln, wenn die Vorrichtung (1) vorher über den mindestens einen Sensor (5) erfasst hat, dass alle Türen (2) und Klappen (3) des Fahrzeugs (10) geschlossen sind.

10. Vorrichtung nach einem der Ansprüche 7-9, **dadurch gekennzeichnet, dass** die Zeitspanne maximal 1 s beträgt.

11. Vorrichtung nach einem der Ansprüche 7-10, **dadurch gekennzeichnet, dass** die mindestens eine Sendeantenne eine Sendeantenne (6) für einen jeweiligen Bereich jeder Tür (2) oder jeder Klappe (3) des Fahrzeugs (10) umfasst, und dass die Vorrichtung (1) derart ausgestaltet ist, dass die Vorrichtung (1) nur über diejenige Sendeantenne (6) für den jeweiligen Bereich der Tür (2) oder der Klappe (3), welche geschlossen wurde, den ID-Geber sucht.

12. Vorrichtung nach einem der Ansprüche 7-11, **dadurch gekennzeichnet, dass** die Vorrichtung (1) zur Durchführung des Verfahrens nach einem der Ansprüche 1-6 ausgestaltet ist.

13. Fahrzeug mit einer Vorrichtung (1) nach einem der Ansprüche 7-12.

## Claims

1. Method for automatically locking a vehicle, wherein the vehicle (10) is automatically locked,
• if a door (2) or a flap (3) of the vehicle (10) is closed and
• if an ID transmitter outside the vehicle (10) is detected,
**characterized in that** checking as to whether the ID transmitter is present outside the vehicle (10) is carried out over a predetermined time period only directly after the door (2) or the flap (3) has been closed, and
**in that** the vehicle (10) is locked if the ID transmitter was found in the predetermined time period.

2. Method according to Claim 1, **characterized in that** the vehicle (10) is locked automatically if the driver's door of the vehicle (10) is closed, wherein this is independent of an opening state of another door (2) of the vehicle or of a flap (3) of the vehicle (10).

3. Method according to Claim 1, **characterized in that** the vehicle (10) is locked automatically only if the doors (2) and the flaps (3) of the vehicle are closed.

4. Method according to one of the preceding claims, **characterized in that** the time period is 1 s at maximum.

5. Method according to one of the preceding claims, **characterized in that** the ID transmitter is searched for in a region of the door (2) or of the flap (3) which has been closed.

6. Method according to one of the preceding claims, **characterized in that** the method is carried out independently of at least one of following conditions:
• a distance of the ID transmitter from the vehicle (10),
• detection of an ID transmitter within the vehicle (10) before the door (2) or the flap (3) closes, and
• detection of opening of the door (2) or of the flap (3) which was closed, within a predetermined time interval before the door (2) or the flap (3) closes.

7. Device for automatically locking a vehicle, wherein the device (1) comprises at least one transmitting antenna (6), at least one receiving antenna, a control unit (7), a locking device (4) for locking the vehicle (10) and at least one sensor (5), wherein the at least one sensor (5) signals to the control unit (7) regarding a door (2) or a flap (3) of the vehicle (10) if the door (2) or the flap (3) is closed,
wherein the device (1) is configured in such a way that the device (1) searches for an ID transmitter outside the vehicle (10) by means of the at least one transmitting antenna (6) if the at least one sensor (5) signals that the door (2) or the flap (3) was closed,
**characterized in that** the control unit (7) instructs the locking device (4) to lock the vehicle (10) if the at least one receiving antenna (8) detects the ID transmitter,
wherein the device (1) is configured in such a way that immediately after the at least one sensor (5) has signalled that the door (2) or the flap (3) has been closed, the device (1) carries out checking as to whether the ID signal transmitter is present outside the vehicle (10) only over a predetermined time period and by means of the at least one transmitting antenna (6), and
**in that** the control unit (7) instructs the locking device (4) to lock the vehicle (10) only if the at least one receiving antenna (8) has detected the ID transmitter in the predetermined time period.

8. Device according to Claim 7, **characterized in that** the device (1) is configured in such a way that the control unit (7) instructs the locking device (4) to lock the vehicle (10) only if the device (1) has previously detected, via the at least one sensor (5), that the driver's door of the vehicle (10) was closed, wherein this is independent of an opening state of another door (2) of the vehicle or of a flap (3) of the vehicle (10).

9. Device according to Claim 7, **characterized in that** the device (1) is configured in such a way that the control unit (7) instructs the locking device (4) to lock the vehicle (10) only if the device (1) has previously detected, via the at least one sensor (5), that all the doors (2) and flaps (3) of the vehicle (10) are closed.

10. Device according to one of Claims 7-9, **characterized in that** the time period is 1 s at maximum.

11. Device according to one of Claims 7-10, **characterized in that** the at least one transmitting antenna comprises a transmitting antenna (6) for a respective region of each door (2) or each flap (3) of the vehicle (10), and **in that** the device (1) is configured in such a way that the device (1) searches for the ID transmitter only via that transmitting antenna (6) for the respective region of the door (2) or of the flap (3) which was closed.

12. Device according to one of Claims 7-11, **characterized in that** the device (1) is configured to carry out the method according to one of Claims 1-6.

13. Vehicle having a device (1) according to one of Claims 7-12.

## Revendications

1. Procédé de verrouillage automatique d'un véhicule, selon lequel le véhicule (10) est verrouillé automatiquement
* lorsqu'une portière (2) ou un capot (3) du véhicule (10) est fermé et
* lorsqu'un codeur d'ID est détecté à l'extérieur du véhicule (10),
**caractérisé en ce que** ce n'est qu'immédiatement après la fermeture de la portière (2) ou du capot (3) qu'un contrôle de la présence du codeur d'ID à l'extérieur du véhicule (10) est effectué pendant un intervalle de temps prédéfini, et
**en ce que** le véhicule (10) est verrouillé lorsque le codeur d'ID a été trouvé pendant l'intervalle de temps prédéfini.

2. Procédé selon la revendication 1, **caractérisé en ce que** le véhicule (10) est verrouillé automatiquement lorsque la portière du conducteur du véhicule (10) est fermée, ceci étant indépendant d'un état d'ouverture d'une autre portière (2) du véhicule ou d'un capot (3) du véhicule (10).

3. Procédé selon la revendication 1, **caractérisé en ce que** le véhicule (10) n'est verrouillé automatiquement que lorsque toutes les portières (2) et tous les capots (3) du véhicule sont fermés.

4. Procédé selon l'une des revendications précédentes, **caractérisé en ce que** l'intervalle de temps est au maximum d'une seconde.

5. Procédé selon l'une des revendications précédentes, **caractérisé en ce que** le codeur d'ID n'est recherché que dans une zone de la portière (2) ou du capot (3) qui a été fermé.

6. Procédé selon l'une des revendications précédentes, **caractérisé en ce que** le procédé est exécuté indépendamment d'au moins l'une des conditions suivantes :
* un écart entre le codeur d'ID et le véhicule (10),
* une détection d'un codeur d'ID à l'intérieur du véhicule (10) avant la fermeture de la portière (2) ou du capot (3), et
* une détection d'une ouverture de la portière (2) ou du capot (3) qui a été fermé à l'intérieur d'un intervalle de temps prédéfini avant la fermeture de la portière (2) ou du capot (3).

7. Dispositif de verrouillage automatique d'un véhicule,
le dispositif (1) comprenant au moins une antenne émettrice (6), au moins une antenne réceptrice, un module de commande (7), un dispositif de verrouillage (4) pour verrouiller le véhicule (10) et au moins un capteur (5),
l'au moins un capteur (5) signalant au module de commande (7) en référence à une portière (2) ou un capot (3) du véhicule (10) lorsque la portière (2) ou le capot (3) est fermé,
le dispositif (1) étant configuré de telle sorte que le dispositif (1) recherche au moyen de l'au moins une antenne émettrice (6) un codeur d'ID à l'extérieur du véhicule (10) lorsque l'au moins un capteur (5) signale que la portière (2) ou le capot (3) a été fermé, **caractérisé en ce que** le module de commande (7) instruit le dispositif de verrouillage (4) de verrouiller le véhicule (10) lorsque l'au moins une antenne réceptrice (8) détecte le codeur d'ID,
le dispositif (1) étant configuré de telle sorte que le dispositif (1), immédiatement après que l'au moins un capteur (5) a signalé que la portière (2) ou le capot (3) a été fermé, n'effectue un contrôle de la présence du codeur d'ID à l'extérieur du véhicule (10) que pendant un intervalle de temps prédéfini par le biais de l'au moins une antenne émettrice (6), et **en ce que** le module de commande (7) n'instruit le dispositif de verrouillage (4) de verrouiller le véhicule (10) que si l'au moins une antenne réceptrice (8) a détecté le codeur d'ID pendant l'intervalle de temps prédéfini.

8. Dispositif selon la revendication 7, **caractérisé en ce que** le dispositif (1) est configuré de telle sorte que le module de commande (7) n'instruit le dispositif de verrouillage (4) de verrouiller le véhicule (10) que si le dispositif (1) a préalablement détecté par le biais de l'au moins un capteur (5) que la portière du conducteur du véhicule (10) a été fermée, ceci étant indépendant d'un état d'ouverture d'une autre portière (2) du véhicule ou d'un capot (3) du véhicule (10).

9. Dispositif selon la revendication 7, **caractérisé en ce que** le dispositif (1) est configuré de telle sorte que le module de commande (7) n'instruit le dispositif de verrouillage (4) de verrouiller le véhicule (10) que si le dispositif (1) a préalablement détecté par le biais de l'au moins un capteur (5) que toutes les portières (2) et tous les capots (3) du véhicule (10) sont fermés.

10. Dispositif selon l'une des revendications 7 à 9, **caractérisé en ce que** l'intervalle de temps est au maximum d'une seconde.

11. Dispositif selon l'une des revendications 7 à 10, **caractérisé en ce que** l'au moins une antenne émettrice comprend une antenne émettrice (6) pour une zone respective de chaque portière (2) ou de chaque capot (3) du véhicule (10), et **en ce que** le dispositif (1) est configuré de telle sorte que le dispositif (1) ne recherche le codeur d'ID que par le biais de l'antenne émettrice (6) pour la zone respective de la portière (2) ou du capot (3) qui a été fermé.

12. Dispositif selon l'une des revendications 7 à 11, **caractérisé en ce que** le dispositif (1) est configuré pour mettre en oeuvre le procédé selon l'une des revendications 1 à 6.

13. Véhicule équipé d'un dispositif (1) selon l'une des revendications 7 à 12.
